# EUROPÄISCHE PATENTANMELDUNG

(11) **EP 4 342 935 A1**
(43) Veröffentlichungstag der Anmeldung: **27.03.2024**
(21) Anmeldenummer: 23196016.2
(22) Anmeldetag: 07.09.2023
(51) Int. Cl.: C08J 7/02, B29C 71/00, B33Y 40/20

(54) **VERFAHREN UND VORRICHTUNG ZUM CHEMISCHEN GLÄTTEN**

(30) Priorität: 20.09.2022 DE 102022124098
(71) Anmelder: Rösler Holding GmbH, 96231 Bad Staffelstein (DE)
(72) Erfinder: BECK, Moritz, 96231 Bad Staffelstein (DE); HARTAN, Lukas, 96317 Kronach (DE); MERKEL, Till, 89231 Neu-Ulm (DE); MÜLLER, Florian, 96106 Ebern (DE); SIMON, Paul, 97653 Bischofsheim i. d. Rhön (DE)
(74) Vertreter: Manitz Finsterwald Patent- und Rechtsanwaltspartnerschaft mbB

(57) **Zusammenfassung**

Bei einem Verfahren zum chemischen Glätten von Bauteilen aus Kunststoff werden diese bei Atmosphärendruck in eine vortemperierte Prozessflüssigkeit aus Glykol eingetaucht.

## Beschreibung

Die vorliegende Erfindung betrifft ein Verfahren und eine Vorrichtung zum chemischen Glätten von Bauteilen aus einem Polymerwerkstoff, die insbesondere in einem additiven Fertigungsverfahren hergestellt sind.

Für die Glättung von Kunststoffoberflächen sind im Stand der Technik verschiedenste Verfahren und Vorrichtungen bekannt. So können beispielsweise Prozessfluide in einen Bearbeitungsraum eingespritzt werden, dort zumindest teilweise verdampfen und dadurch entweder als Flüssigkeiten oder als Dampf auf die Oberflächen der Produkte einwirken. Einige Verfahren verwenden eine Unterdruckkammer, wobei jedoch auch Überdruckverfahren bekannt sind. Die verwendeten Prozessflüssigkeiten sind dabei häufig gesundheitsschädlich, umweltrelevant, ätzend oder leicht brennbar.

Es ist die Aufgabe der vorliegenden Erfindung, ein Verfahren und eine Vorrichtung zum chemischen Glätten von Kunststoffbauteilen zu schaffen, mit denen bei geringem apparativem Aufwand ein effizientes und qualitativ hochwertiges Glätten in kurzer Zeit erzielt werden kann, wobei die Belastung der Umwelt minimiert ist.

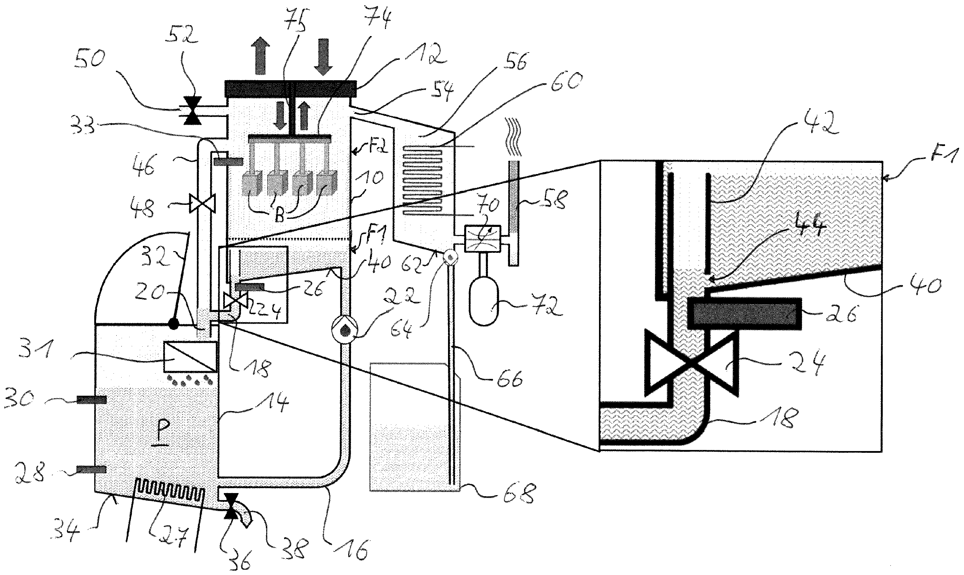

Die Lösung dieser Aufgabe erfolgt durch die Merkmale der unabhängigen Ansprüche. Vorteilhafte Ausführungsformen sind in der Beschreibung, der Zeichnung sowie den Unteransprüchen beschrieben.

Bei einem erfindungsgemäßen Verfahren zum chemischen Glätten wird eine vortemperierte Prozessflüssigkeit bereitgestellt und aus einem Polymerwerkstoff hergestellte Bauteile werden über einen Zeitraum vollständig mit Prozessflüssigkeit benetzt, insbesondere in diese eingetaucht. Hierbei wird unter einem Eintauchen verstanden, dass die Bauteile vollständig von Prozessflüssigkeit umgeben sind. Die Bauteile können also auch in einen Behälter eingebracht werden, der anschließend mit Prozessflüssigkeit gefüllt oder geflutet wird, so dass sich die Bauteile vollständig in der Prozessflüssigkeit befinden. Nachdem die Bauteile über einen Zeitraum in die Prozessflüssigkeit eingetaucht wurden, werden diese aus der Prozessflüssigkeit entnommen.

Die Prozessflüssigkeit kann jedoch nicht nur durch Eintauchen auf die Bauteile aufgebracht werden, sondern alternativ oder zusätzlich auch durch Sprühen. Bei einem Aufsprühen können in Abhängigkeit von der Viskosität und der Sprühdauer ausreichende Kontaktzeiten erzielt werden. Gleichzeitig kann eine Sprühbehandlung auch dazu dienen, feine Strukturen und Spitzen weniger zu glätten als durch ein Eintauchen, da die Prozessflüssigkeit von derartigen Konturen leichter ablaufen kann.

Erfindungsgemäß wird das vorgenannte Verfahren bei Atmosphärendruck durchgeführt und die Prozessflüssigkeit besteht zu mindestens 50 Vol% aus einem Glykol oder einer Mischung aus mehreren Glykolen. Es hat sich nämlich herausgestellt, dass eine im Wesentlichen aus Glykol oder einer Glykolmischung bestehende Prozessflüssigkeit zum Glätten von Bauteilen, insbesondere von Bauteilen, die in additiven Herstellungsverfahren hergestellt sind, außerordentlich wirksam ist. Glykole sind zudem als nicht ätzend und nicht als leicht brennbar eingestuft, so dass der apparative Aufwand einfach gehalten werden kann. Da das Verfahren bei Atmosphärendruck arbeitet, sind keine Vakuumkammern, Druckkammern oder dergleichen erforderlich und es können kostengünstige Komponenten wie Pumpen, Ventile und dgl. eingesetzt werden. Erfindungsgemäß wird hierbei unter Atmosphärendruck der Umgebungsdruck verstanden, wobei ein geringfügiges, insbesondere temporäres, Über- oder Unterschreiten des Umgebungsdruckes, beispielsweise um 5, 10, 20, 30, 40 oder 50 mbar, ebenfalls als erfindungsgemäß angesehen wird.

Nach einer vorteilhaften Ausführungsform kann die Prozessflüssigkeit auf eine Temperatur von etwa 150 °C bis 190 °C, insbesondere auf eine Temperatur von etwa 160 °C bis 180 °C vortemperiert werden. Prozesstemperaturen in diesem Bereich haben sich als besonders wirksam gezeigt. Durch die erhöhte Temperatur nimmt die Beweglichkeit der Polymerketten im meist teilkristallinen Polymerwerkstoff zu. Die Moleküle der Prozessflüssigkeiten legen sich im oberflächennahen Bereich zwischen die Polymerketten und mobilisieren diese weiter. Für die beweglichen Polymerketten ist es energetisch vorteilhaft, ihre Oberflächengröße zu reduzieren, wodurch die Glättungswirkung entsteht. Hierbei wird die Glättungswirkung der Prozessflüssigkeit auf die Bauteiloberfläche entscheidend durch die Temperatur und die physikalisch-chemische Wechselwirkung bestimmt.

Nach einer weiteren vorteilhaften Ausführungsform können die Bauteile über einen Zeitraum von weniger als 15 oder 20 Minuten, insbesondere von weniger als 10 Minuten mit Prozessflüssigkeit behandelt werden. Bei Versuchen hat sich nämlich herausgestellt, dass ein äußerst effektives, qualitativ hochwertiges Glätten bereits dann erzielt werden kann, wenn die Bauteile nur wenige Minuten mit Prozessflüssigkeit in Kontakt waren.

Nach einer weiteren vorteilhaften Ausführungsform können die Bauteile mehrfach eingetaucht und wieder aus der Prozessflüssigkeit entnommen werden. Nachdem die Prozessflüssigkeit vortemperiert worden ist, kann hierdurch auch ein Vorwärmen der Teile erfolgen, bevor der eigentliche Glättungsvorgang beginnt. Alternativ oder zusätzlich ist es auch möglich, die Bauteile mit Hilfe des sich über der Prozessflüssigkeit entwickelnden Dampfes vorzuwärmen.

Gemäß der vorliegenden Erfindung besteht die Prozessflüssigkeit zu mindestens 50 Vol% aus einem Glykol oder einer Mischung aus mehreren Glykolen. Die Art des Glykols kann hierbei variieren. Gemäß einer vorteilhaften Ausführungsform entspricht wenigstens ein Glykol bzw. das Glykol der nachfolgenden Formel (I):

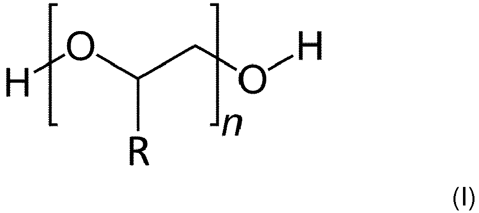

In Formel (I) ist n eine ganze Zahl im Bereich von 1 bis 60, insbesondere im Bereich von 1 bis 15 und R ist entweder ein Wasserstoffatom oder ein monovalenter organischer Rest, vorzugsweise ein Kohlenwasserstoffrest, insbesondere mit 1 bis 15 Kohlenstoffatomen. R ist vorzugsweise ein gesättigte Kohlenwasserstoffgruppe mit 1 bis 5 Kohlenstoffatomen. Gemäß einer besonders bevorzugten Ausführungsform ist R ein Wasserstoffatom oder eine Methylgruppe, insbesondere ein Wasserstoffatom. Die in Formel (I) gezeigten endständigen Wasserstoffatome können optional durch andere Endgruppen substituiert sein.

Gemäß einer noch vorteilhafteren Ausführungsform ist wenigstens ein Glykol der Prozessflüssigkeit ein Ethylenglykol, ein Propylenglykol oder in dimeres, trimeres, tetrameres oder pentameres von Ethylenglykol oder Propylenglykol, insbesondere Triethylenglykol.

Nach einer weiteren vorteilhaften Ausführungsform kann die Prozessflüssigkeit eine Mischung aus mindestens zwei Glykolen umfassen, wobei die Mischung insbesondere aus genau zwei Glykolen bestehen kann. Als vorteilhaft haben sich dabei Mischungen aus Triethylenglykol, d.h. ein trimeres von Ethylenglykol, und Polyethylenglykol gezeigt, die bei Prozesstemperaturen im Bereich von 160 bis 190 °C einen geringen Dampfdruck aufweisen und dadurch mit nur geringem apparativem Aufwand sicher eingesetzt werden können.

Eine Mischung aus zwei Glykolen kann im Mischungsverhältnis von 5:1 bis 1:5, insbesondere im Mischungsverhältnis von 1:1 vorliegen. Durch eine geeignete Anpassung des Mischungsverhältnisses kann die Prozessflüssigkeit für verschiedene Glättungsaufgaben optimiert werden.

Weiterhin kann es vorteilhaft sein, wenn die Prozessflüssigkeit in einem geringen Anteil, beispielsweise einem Anteil von kleiner 2 Vol%, Salze und/oder Mineralsäuren enthält. So kann beispielsweise ein Zusatz von Mineralsäure, beispielsweise Schwefelsäure, mit einem Anteil von kleiner 1 Vol% vorteilhaft sein, um den Glättungsprozess zu optimieren.

Erfindungsgemäß besteht die Prozessflüssigkeit zu mindestens 50 Vol% aus einem Glykol oder einer Mischung aus mehreren Glykolen. Der Gehalt des Glykols bzw. der Mischung aus mehreren Glykolen in der Prozessflüssigkeit kann in Abhängigkeit des zu behandelnden Polymermaterials angepasst werden und beträgt gemäß einer bevorzugten Ausführungsform mindestens 75 Vol%, bevorzugter mindestens 90 Vol%, noch bevorzugter mindestens 98 Vol%. Sofern ein Anteil der Prozessflüssigkeit nicht aus Glykolen besteht, weist dieser Anteil vorzugsweise einen Siedepunkt auf, der Oberhalb der Prozesstemperatur liegt, insbesondere oberhalb einer Temperatur, auf welche die Prozessflüssigkeit gegebenenfalls vortemperiert wird, d.h. einen Siedepunkt oberhalb einer Temperatur von etwa 150 °C bis 190 °C, insbesondere einen Siedepunkt oberhalb einer Temperatur von etwa 160 °C bis 180 °C. Geeignete Beispiele für diesen Anteil sind Öle auf Basis von Kohlenwasserstoffen oder siliziumorganischen Verbindungen, polymere Verbindungen, Alkandiole und andere höherwertige Alkohole, die 3 bis 10 Kohlenstoffatome, insbesondere 3 bis 7 Kohlenstoffatome, aufweisen und keine Glykole sind, sowie Oligomere derartiger Alkandiole mit 2 bis 10 Wiederholungseinheiten, sowie Mischungen dieser Beispiele oder auch langkettige einwertige Alkohole wie Octanol.

Nach einer weiteren vorteilhaften Ausführungsform kann die Prozessflüssigkeit einen gelösten oder dispergierten Farbstoff umfassen. Da die Prozessflüssigkeit beim Glättungsprozess auch in die Oberfläche der Bauteile eindringt, können derartige Farbstoffe ebenfalls in die Bauteiloberfläche eindringen und dort reagieren und dadurch die Kunststoffoberfläche färben.

Der Polymerwerkstoff, aus welchem ein Bauteil, das mit dem erfindungsgemäßen Verfahren geglättet wird, ist nicht weiter beschränkt. Vorzugsweise basiert der Polymerwerkstoff jedoch auf einem Polymer, welches auf wenigstens einem Monomer mit wenigstens einem Heteroatom, insbesondere Sauerstoff, Stickstoff oder Schwefel, basiert. Durch das Heteroatom kann eine Wechselwirkung zwischen dem Polymermaterial und Molekülen der Prozessflüssigkeit, insbesondere dem Glykol, auftreten, sodass diese Moleküle im oberflächennahen Bereich zwischen die Polymerketten eintreten und diese mobilisieren können. Wie oben beschrieben, entsteht hierdurch eine Glättungswirkung, da die mobilisierten Polymerketten einen energetisch vorteilhaften Zustand annehmen.

Vorzugsweise basiert der Polymerwerkstoff auf Polyamid, Polyester oder Polyetheretherketon. Gemäß einer vorteilhaften Weiterbildung ist der Polymerwerkstoff ein Polyamid, welches ausgewählt ist aus der Gruppe bestehend aus PA 6, PA 11, PA 12, PA 6.6, PA 6.9, PA 6.12, PA 4.6, PA 12.12, insbesondere aus der Gruppe bestehend aus PA6, PA 11, PA 12. Bei einer weiteren vorteilhaften Weiterbildung ist der Polymerwerkstoff ein Polyester, welcher ausgewählt ist aus der Gruppe bestehend aus PBT, PET, PLA, PTT, PEN, PC, PEC und PAR, insbesondere aus der Gruppe bestehend aus PBT, PET, PLA und PEN. Ein besonders bevorzugter Polyester ist PBT. Der Werkstoff kann auch auf Polyurethanen oder auf thermoplastischen Polyurethanen basieren.

Wie vorstehend bereits erwähnt, ist die Temperatur des Bauteils während des Glättungsprozesses eine wichtige Prozessgröße zur Steuerung des Prozesses. Nach einer weiteren vorteilhaften Ausführungsform kann deshalb die Temperatur eines Bauteils während des Verfahrens insbesondere kontinuierlich erfasst und als Steuerparameter verwendet werden. Durch eine genaue Erfassung der Bauteiltemperatur kann beispielsweise die Bauteiltemperatur innerhalb eines Temperaturfensters erfasst werden, in dem sich eine Glättwirkung zu entwickeln beginnt. Auf Basis dieser Temperatur kann dann die Temperatur der Prozessflüssigkeit, die Verweildauer der Bauteile in der Prozessflüssigkeit und/oder ein anderer Prozessparameter gesteuert werden.

Zur Erfassung der Bauteiltemperatur kann es vorteilhaft sein, wenn vor dem Eintauchen an einem der Bauteile ein Temperatursensor angebracht wird. Der Temperatursensor kann beispielsweise an einer Oberfläche des Bauteils angebracht werden, die bei der späteren Verwendung keine Sichtfläche darstellt. Auch ist es möglich, einen Temperatursensor an einer Bauplatte zu befestigen, die aus dem gleichen Material wie die Bauteile besteht. Schließlich ist es auch möglich, innerhalb einer Charge ein Bauteil als "Opferbauteil" einzusetzen, wobei der Temperatursensor dann beispielsweise in eine Bohrung des Opferbauteils eingebracht werden kann, um die Oberflächentemperatur des Bauteils und insbesondere auch den Temperaturverlauf für verschiedene Einbringtiefen zu erfassen. Ein solches Opferbauteil kann die gleiche Geometrie wie die übrigen zu glättenden Bauteile aufweisen, und es kann insbesondere auch für mehrere Chargen verwendet werden

Alternativ kann in der Nähe eines Bauteils ein Temperatursensor angebracht werden, der einen Temperaturfühler und eine Hülle mit bekannten Eigenschaften wie Material, Dicke oder Wärmeleitfähigkeit aufweist. In Abhängigkeit von der Umgebungstemperatur des Sensors und der Aufenthaltszeit in der flüssigen Phase oder in der Gasphase der Prozessflüssigkeit ändert sich der vom Sensor ermittelte Messwert. Durch Anwendung geeigneter Korrelationen (empirische Ermittlung, theoretische Berechnung über instationäre Wärmeleitung) kann dieser Messwert dann in eine aktuelle Bauteiltemperatur umgerechnet werden. Eine Berücksichtigung der Materialeigenschaften des Bauteils ermöglicht auch die Berechnung von Temperaturprofilen innerhalb des Bauteils, so dass auch Temperaturverläufe in Abhängigkeit von der Bauteilgeometrie über eine Messung mit einem solchen Sensor ermittelt werden können.

Nach einer weiteren vorteilhaften Ausführungsform kann das Eintauchen in die Prozessflüssigkeit in einem Bearbeitungsbehälter erfolgen, der mit einem Deckel luftdicht verschließbar ist. Hierdurch kann verhindert werden, dass bei Erhitzen der Prozessflüssigkeit über die freie Fluidoberfläche Dämpfe entweichen, die sich in der Umgebung niederschlagen könnten. Die entstehenden Dämpfe können dann beispielsweise über einen Filter abgeleitet werden.

Nach einer weiteren vorteilhaften Ausführungsform kann die Prozessflüssigkeit in einem Temperierbehälter vortemperiert und von dort in einen Bearbeitungsbehälter überführt werden, in dem die Bauteile in die Prozessflüssigkeit eingetaucht werden. Der Temperierbehälter dient hierbei als Vorratsbehälter, in dem die Prozessflüssigkeit sehr effektiv erhitzt oder gekühlt werden kann.

Nach einer weiteren vorteilhaften Ausführungsform kann die Prozessflüssigkeit zwischen dem Temperierbehälter und dem Bearbeitungsbehälter im Kreis geführt werden. Auf diese Weise ist sichergestellt, dass innerhalb der Prozessflüssigkeit kein nennenswerter Temperaturgradient vorliegt und dass sich gewünschte Temperaturänderungen rasch auf die gesamte Prozessflüssigkeit auswirken.

Nach einer weiteren vorteilhaften Ausführungsvariante können die Bauteile nach dem Entnehmen aus der Prozessflüssigkeit in dem Bearbeitungsbehälter gekühlt werden. So ist es beispielsweise möglich, Umgebungsluft durch den Raum oberhalb der Fluidoberfläche innerhalb des Bearbeitungsbehälters zu führen, um dadurch die Bauteile zu kühlen. Da ein Glättungsprozess nicht schleichend sondern eher sprunghaft beginnt, kann dieser mit sehr geringen Temperaturänderungen initiiert oder beendet werden. Auch eine Abkühlung der Prozessflüssigkeit durch einen Kühler in einer Zulaufleitung oder durch Einbringen sehr kalter Medien (z.B. geringen Mengen flüssiger Stickstoff oder Trockeneis) kann hier den gewünschten Effekt, also das schnelle Abkühlen der Flüssigkeit und damit die Verschiebung der Temperatur aus dem Prozessfenster heraus, bewirken.

Nach einem weiteren Aspekt betrifft die vorliegende Erfindung eine Vorrichtung zur Durchführung eines Verfahrens der vorstehenden Art, umfassend einen Bearbeitungsbehälter und einen Temperierbehälter zur Temperierung der Prozessflüssigkeit, wobei die beiden Behälter über einen Flüssigkeitskreislauf, in dem sich eine Pumpe befindet, miteinander verbunden sind. Mit einer solchen Vorrichtung lässt sich die Prozessflüssigkeit effektiv temperieren, ohne dass innerhalb der Prozessflüssigkeit nennenswerte Temperaturgradienten auftreten. Erfindungsgemäß ist es auch möglich, eine Kühleinrichtung, beispielsweise eine Kühlschlange zum Abkühlen, vorzusehen. Auf diese Weise kann ein Abkühlen / Einfrieren der Bauteiloberfläche mit Flüssigkeit erfolgen. Die kalte Flüssigkeit könnte durch Sprühen aufgebracht werden. Durch eine kombinieret Anwendung von Tauchen, Sprühen und Gasphase können besonders gute Ergebnisse erzielt werden.

Nach einer weiteren vorteilhaften Ausführungsform kann der Bearbeitungsbehälter mit einem Deckel luftdicht verschließbar sein und mit einem Gasauslass versehen sein. Auf diese Weise können Dämpfe innerhalb des Bearbeitungsbehälters gezielt abgeführt und beispielsweise gefiltert werden.

Nach einer weiteren vorteilhaften Ausführungsform kann der Gasauslass in eine Kühleinrichtung münden, die mit der Atmosphäre in Verbindung steht. Durch eine solche Kühleinrichtung wird verhindert, dass austretende Dämpfe die Umgebung unerwünscht erwärmen. Gleichzeitig kann die Kühleinrichtung mit einem Kondensator versehen werden, der Prozessflüssigkeit kondensiert, so dass ein aus der Kühleinrichtung austretendes Gas frei von Prozessdampf ist.

Nach einer weiteren vorteilhaften Ausführungsform kann der Deckel des Bearbeitungsbehälters eine Halterung für zu glättende Bauteile aufweisen. Dies stellt eine apparativ einfache Lösung dar, da durch Absenken bzw. Schließen des Deckels gleichzeitig die zu glättenden Bauteile in den Bearbeitungsbehälter eingeführt werden können.

Nach einer weiteren vorteilhaften Ausführungsform kann zumindest eine Hubeinrichtung vorgesehen sein, mit welcher der Deckel relativ zu dem Bearbeitungsbehälter und die Halterung relativ zu dem Deckel bewegbar ist. Mit einer solchen Hubeinrichtung, die beispielsweise einen oder zwei Stellantriebe umfassen kann, kann einerseits der Deckel auf den Bearbeitungsbehälter abgesenkt werden. Andererseits kann bei geschlossenem Deckel ein Absenken der zu glättenden Bauteile erfolgen, so dass diese in die Prozessflüssigkeit eintauchen bzw. von Prozessflüssigkeit umgeben werden können, indem diese in den Bearbeitungsbehälter gefüllt wird.

Nachfolgend wird die vorliegende Erfindung rein beispielhaft anhand einer vorteilhaften Ausführungsform und unter Bezugnahme auf die beigefügte Zeichnung beschrieben.

Die einzige Figur zeigt eine beispielhafte Ausführungsform einer Vorrichtung zum Glätten von Kunststoffbauteilen.

Die in der Figur gezeigte Vorrichtung umfasst einen Bearbeitungsbehälter 10, der von einem Deckel 12 luftdicht verschlossen werden kann. Unterhalb des Bearbeitungsbehälters 10 und neben diesem ist ein insbesondere isolierter Temperierbehälter 14 vorgesehen, in dem Prozessflüssigkeit P aufgenommen werden kann. Die beiden Behälter 10 und 14 sind dabei über einen Flüssigkeitskreislauf miteinander verbunden, der eine erste Rohrleitung 16 und eine zweite Rohrleitung 18 umfasst, die insbesondere isoliert sind. Hierbei verbindet die erste Rohrleitung 16 einen Bodenbereich des Temperierbehälters 14 mit einem Bodenbereich des Bearbeitungsbehälters 10. Die zweite Rohrleitung 18, die etwa diametral zur ersten Rohrleitung 16 an der Unterseite des Bearbeitungsbehälters 10 angeordnet ist, verbindet die Unterseite des Bearbeitungsbehälters 10 mit einem Einlass 20 des Temperierbehälters 14.

In der Rohrleitung 16 zwischen Temperierbehälter 14 und Bearbeitungsbehälter 10 befindet sich weiterhin eine Pumpe 22, mit der die Prozessflüssigkeit P zwischen dem Temperierbehälter 14 und dem Bearbeitungsbehälter 10 im Kreis gepumpt werden kann. Um den Bearbeitungsbehälter 10 (zumindest teilweise) mit Prozessflüssigkeit P zu fluten, ist in der Rohrleitung 18 ein Ventil 24 vorgesehen, das bei geschlossenem Ventil einen Rückfluss von Prozessflüssigkeit von dem Bearbeitungsbehälter 10 in den Temperierbehälter 14 verhindert. In Strömungsrichtung vor dem Ventil 24 ist ein Temperaturfühler 26 angeordnet, der mit einer (nicht dargestellten) Steuerung verbunden ist. Diese Steuerung steuert auch eine innerhalb des Temperierbehälters 14 vorgesehene Heizeinrichtung 27 an, so dass die Prozessflüssigkeit P innerhalb des Temperierbehälters 14 auf eine gewünschte Temperatur vortemperiert werden kann. Durch eine nicht dargestellte Kühleinrichtung in dem Temperierbehälter 14 und/oder in den Rohrleitungen 16 oder 18 kann auch ein Kühlen der Prozessflüssigkeit erfolgen. Es kann auch in dem Bearbeitungsbehälter 10 eine Temperierung erfolgen, beispielsweise eine Wandtemperierung (kalt, warm), z.B. doppelwandig (z.B. Thermoblech) oder mit aufgeschweißter Rohrleitung. Innerhalb des Temperierbehälters 14 ist in dessen Bodenbereich ein Füllstandssensor 28 und etwa in dessen Mitte ein weiterer Temperaturfühler 30 vorgesehen. Weiterhin befindet sich innerhalb des Temperierbehälters 14 unterhalb des Einlasses 20 ein Filter 31, mit dem Partikel oder Feststoffe - z.B. Pulveranhaftungen aus dem Herstellungsprozess, ausgefiltert werden. Schließlich bezeichnet das Bezugszeichen 32 eine Wartungsklappe, mit welcher der Temperierbehälter 14 luftdicht verschlossen werden kann.

Der Boden des Temperierbehälters 14 ist geneigt und als Schrägboden 34 ausgebildet, wobei sich am tiefsten Punkt des Schrägbodens 34 ein von einem Ventil 36 versperrbarer Auslass 38 befindet, um die Prozessflüssigkeit P bei Bedarf vollständig abzulassen.

Wie die Figur weiterhin zeigt, ist der Bearbeitungsbehälter 10 ebenfalls mit einem Schrägboden 40 versehen, an dessen tiefstem Punkt die Rohrleitung 18 angeordnet ist. Wie dabei die vergrößerte Darstellung in der Figur verdeutlicht, geht die Rohrleitung 18 innerhalb des Bearbeitungsbehälters 10 in einen vertikal orientierten Rohrstutzen 42 über, an dessen unterem Ende, d.h. unmittelbar oberhalb des Schrägbodens 40, ein Durchbruch 44 vorgesehen ist, um die Prozessflüssigkeit P bei Bedarf vollständig aus dem Bearbeitungsbehälter 10 zu entleeren. Im normalen Betrieb ist die Fördermenge der Pumpe 22 so gewählt, dass diese größer ist als die Ablaufmenge, die durch den Durchbruch 44 strömen kann, so dass sich bei Betrieb der Pumpe 22 der Bearbeitungsbehälter 10 mit Prozessfluid P bis zu dem in der Figur dargestellten Füllstand F1 füllt, wenn das Ventil 24 geöffnet ist. Durch Schließen des Ventils 24 kann bei Betrieb der Pumpe 22 der Bearbeitungsbehälter 10 mit Prozessfluid P gefüllt bzw. geflutet werden, bis die Prozessflüssigkeit P innerhalb des Bearbeitungsbehälters 10 einen Füllstand F2 erreicht hat. Oberhalb des Füllstands F2 mündet eine Überlaufleitung 46 in das Innere des Bearbeitungsbehälters 10, die an ihrem unteren Ende in den Einlass 20 des Temperierbehälters 14 geführt ist. Durch ein Ventil 48 kann die Überlaufleitung 46 verschlossen werden, so dass Dampf und/oder Flüssigkeit nicht mehr aus dem Bearbeitungsbehälter 10 in den Temperierbehälter 14 gelangen kann. Unterhalb der Überlaufleitung 46 im Bereich des Füllstands F2 ist ein Temperaturfühler 33 in dem Bearbeitungsbehälter 10 angeordnet.

Die Figur zeigt weiter, dass im oberen Bereich des Bearbeitungsbehälters 10 ein Frischlufteinlass 50 vorgesehen ist, der von einem Ventil 52 verschließbar ist. Etwa diametral zu dem Frischlufteinlass 50 befindet sich im oberen Bereich des Bearbeitungsbehälters 10 ein Gasauslass 54, der über einen Gaskühler 56 mit einem Luftauslass 58 in Verbindung steht, der zur Atmosphäre hin offen ist. Das Innere des Bearbeitungsbehälters 10 steht also zu jedem Zeitpunkt mit der umgebenden Atmosphäre in Verbindung.

Der Gaskühler 56 kann beispielsweise eine Kühlwendel 60 umfassen, die von Kühlflüssigkeit durchströmt wird, wodurch durch den Gasauslass 54 in die Kühleinrichtung 56 austretender Dampf innerhalb der Kühleinrichtung 56 kondensiert. Am Boden 62 der Kühleinrichtung 56 ist über eine Kondensatpumpe 64 eine Kondensatleitung 66 angeschlossen, die in einen Auffangbehälter 68 für Kondensat mündet.

Weiterhin ist zwischen der Kühleinrichtung 56 und dem Luftauslass 58 ein Injektor 70 vorgesehen, der einen regelbaren Druckminderer aufweist und der mit einer Druckluftversorgung 72 in Verbindung steht. Hierdurch kann Dampf innerhalb des Bearbeitungsbehälters 10 mit einer erhöhten Luftströmung aus diesem heraus gefördert werden, wie nachfolgend noch näher beschrieben wird.

Der in der Figur dargestellte Deckel 12 kann mit einer nicht näher dargestellten Hubeinrichtung entlang der über dem Deckel 12 dargestellten Pfeile in vertikaler Richtung auf und ab bewegt werden, um zu glättende Bauteile B in das Innere des Bearbeitungsbehälters 10 einzubringen. Hierzu ist bei dem dargestellten Ausführungsbeispiel an der Unterseite des Deckels 12 eine Halterung 74 vorgesehen, an der die Bauteile B befestigt werden können, und die mit Hilfe einer Hubeinrichtung 75 in Richtung der dargestellten Pfeile vertikal anhebbar und absenkbar ist, um die Bauteile B innerhalb des Bearbeitungsbehälters 10 in Prozessflüssigkeit P eintauchen oder aus dieser entfernen zu können.

Die vorstehend beschriebene Anlage kann auch mit mehreren separaten Behältern ausgeführt werden, um die einzelnen Prozessschritte (Aufheizen, Glätten, Kühlen, Färben, Spülen etc.) räumlich voneinander zu trennen und in optimierter Taktzeit in einem industriellen Prozess durchführen zu können. In dem Glättungsprozess in der beschriebenen Anlage und den aufgeführten Prozessflüssigkeiten können die Bauteile mehrere Prozessschritte durchlaufen, d.h. die Bauteile werden durch die Prozessflüssigkeit erwärmt, chemisch geglättet, ggf. durch zusätzlich eingebrachte Farbstoffe simultan gefärbt, durch Luft oder kühlere Prozessflüssigkeit abgekühlt, um den Glättungsprozess zu beenden und/oder die Bauteile abzukühlen oder um die Bauteile im Anschluss an die Behandlung mit der Prozessflüssigkeit beispielsweise mit Wasser und ggf. geeigneten Zusätzen wie Säure, Lauge, Salzen, organischen Zusätzen wie Tensiden oder Alkoholen etc. zu spülen und/oder gleichzeitig abzukühlen. Diese Prozessschritte können ohne den Spülprozess in einem Arbeitsbehälter durchgeführt werden. Es ist in einer weiterführenden Ausführung aber auch möglich, dass die Behandlung der Bauteile mit dem erfindungsgemäßen Verfahren in einer Anlage ausgeführt wird, in der die Ausführung der Prozessschritte auf mehrere Arbeitsbehälter aufgeteilt ist.

Nachfolgend wird ein Verfahren zum chemischen Glätten von Bauteilen B unter Verwendung der vorstehend beschriebenen Vorrichtung beschrieben.

Zu Beginn des Glättprozesses befindet sich sämtliche Prozessflüssigkeit P innerhalb des Temperierbehälters 14 und der Deckel 12 ist so weit angehoben, dass zu glättende Bauteile B, die aus einem Polymerwerkstoff hergestellt sind, an der Halterung 74 an der Unterseite des Deckels 12 befestigt werden können. Durch Absenken des Deckels 12 kann dieser anschließend auf den Bearbeitungsbehälter 10 aufgesetzt werden, so dass dieser an seiner Oberseite luftdicht verschlossen ist.

Bei geschlossenen Ventilen 36 und 52 und geöffneten Ventilen 24 und 48 werden anschließend die Heizeinrichtung 27 und die Pumpe 22 aktiviert, wodurch die Prozessflüssigkeit P innerhalb des Temperierbehälters 14 vortemperiert und dabei gleichzeitig durch die Rohrleitung 16, den Bearbeitungsbehälter 10 und die Rohrleitung 18 zirkuliert wird. Die Förderleistung der Pumpe 22 wird dabei so gewählt, dass die Prozessflüssigkeit innerhalb des Bearbeitungsbehälters 10 den Füllstand F1 nicht überschreitet, sondern die gesamte Prozessflüssigkeit durch den Durchbruch 44 in die Rohrleitung 18 strömt und dadurch gleichmäßig ohne nennenswerten Temperaturgradienten erwärmt und zirkuliert werden kann.

Nach einer vorbestimmten Zeitdauer oder nach Erreichen einer gewünschten Temperatur ist die Prozessflüssigkeit P so weit erwärmt worden, dass sich oberhalb der Fluidoberfläche Dampf ausbildet, der die Bauteile B innerhalb des Bearbeitungsbehälters 10 vorwärmen kann. Es besteht jedoch zu jedem Zeitpunkt eine Verbindung zwischen dem Inneren des Bearbeitungsbehälters 10 und der umgebenden Atmosphäre, nämlich über den Gasauslass 54, die Kühleinrichtung 56 und den Luftauslass 58.

Nachdem die Bauteile B eine gewünschte Vorwärmtemperatur erreicht haben, kann das Ventil 24 geschlossen werden, so dass sich der Bearbeitungsbehälter 10 bis zu dem Füllstand F2 mit erhitzter Prozessflüssigkeit P füllt. Hierdurch werden die Bauteile B in die Prozessflüssigkeit P eingetaucht. Überschüssige Prozessflüssigkeit und auch Dampf innerhalb des Bearbeitungsbehälters 10 können über die Überlaufleitung 46, den Einlass 20 und den Filter 31 in den Temperierbehälter 14 rückgeführt werden. Nach einer bestimmten Zeitdauer, beispielsweise nach wenigen Minuten, ist der eigentliche Glättvorgang beendet, so dass die Pumpe 22 vollständig abgeschaltet und das Ventil 24 geöffnet werden können, wodurch die Prozessflüssigkeit P in den Temperierbehälter 14 zurückströmt, dessen Heizeinrichtung 27 dann deaktiviert ist.

Ein sich während des Glättungsvorgangs oberhalb der Fluidoberfläche entwickelnder Dampf kann über den Gasauslass 54 in die Kühleinrichtung 56 austreten und dort kondensieren, so dass das entstehende Kondensat von der Kondensatpumpe 64 in die Kondensatleitung 66 und von dort in den Kondensatbehälter 68 gefördert werden kann. Die dann durch den Luftauslass 58 austretende Luft ist dadurch von Prozessdampf befreit.

Um anschließend die Bauteile B innerhalb des Bearbeitungsbehälters 10 zu kühlen, kann das Ventil 52 des Lufteinlasses 50 geöffnet werden und es kann über die Druckluftversorgung 72 Druckluft in den Injektor 70 eingebracht werden, die dann durch den Luftauslass 58 ausströmt. Hierdurch wird die Strömungsgeschwindigkeit erhöht und durch den Lufteinlass 50 wird Umgebungsluft angesaugt. Diese durchströmt den Bearbeitungsbehälter 10 und kühlt dadurch die Bauteile B. Gleichzeitig entleert sich das Innere des Bearbeitungsbehälters 10 vollständig von Dampf, der durch den vorhergehenden Glättungsprozess entstanden ist.

Wenn das Innere des Bearbeitungsbehälters 10 sich auf eine gewünschte Temperatur abgekühlt hat, was beispielsweise durch den Temperaturfühler 33 detektiert werden kann, besitzen auch die Bauteile B eine Temperatur, die eine Entnahme erlaubt. Der Deckel 12 kann dann wieder angehoben werden, so dass die Bauteile B aus der Halterung 74 entfernt werden können.

Es versteht sich, dass der vorstehend beschriebene Arbeitsablauf vollständig durch die (nicht dargestellte) Steuerung kontrolliert und gesteuert werden kann, wobei auch die eingangs beschriebenen Temperatursensoren zur Ermittlung der Temperatur der Bauteile mit der Steuerung in Verbindung stehen können. In der Steuerung können auch material- und bauteilspezifische Behandlungsprogramme mit Parametern zur Bauteilbehandlung hinterlegt sein. So können in der Steuerung folgende Parameter und Aktionen hinterlegt werden: Behandlungszeiten, z.B. zum Aufheizen der Bauteile in der Gasphase, für das Aufsprühen oder das kurzzeitige oder vollständige Eintauchen, die Einwirkzeit der Prozessflüssigkeit auf die Oberfläche oder auf Teilbereiche der Oberfläche bei verschiedenen Temperaturen, die Temperatur in Gasphase und Prozessflüssigkeit, das Abkühlen mit Luft, durch Aufsprühen kühlerer Prozessflüssigkeit oder durch Eintauchen, zugehörige Aktionen der (teil-)automatisierten Anlagenbestandteile wie z.B. der Hub-Senk-Vorrichtung, der Ventile, Temperiereinrichtungen, Pumpen und Gebläse. Als Prozessflüssigkeit eignen sich besonders gut die in dieser Anmeldung beschriebenen Glykole oder Glykolmischungen.

Nach dem Glättprozess können die Bauteile noch einem Spülprozess unterworfen werden, um eine gleichbleibende Qualität sicher zu stellen.

Die Steuerung kann als lokale oder globale Steuerung, ggf. mit digitaler Schnittstelle zur Einbindung in eine Prozesskette mit Datentransfer ausgebildet sein, um weitergehende Optimierungen und Auswertungen, z.B. über Algorithmen, Maschinendatenerfassungssysteme oder Fertigungssteuerungssysteme, zu ermöglichen.

## Patentansprüche

1. Verfahren zum chemischen Glätten von aus einem Polymerwerkstoff hergestellten Bauteilen (B), umfassend die folgenden Schritte:
- Bereitstellen einer vortemperierten Prozessflüssigkeit (P),
- Aufbringen von Prozessflüssigkeit (P) auf die Bauteile (B), insbesondere Eintauchen der Bauteile (B) in die Prozessflüssigkeit (P), über einen Zeitraum, und
- Entfernen der Prozessflüssigkeit (P) von den Bauteilen (B),
**dadurch gekennzeichnet,**
**dass** das Verfahren bei Atmosphärendruck durchgeführt wird, und
**dass** die Prozessflüssigkeit (P) zu mindestens 50 Vol% aus Glykol oder einer Mischung von Glykolen besteht.

2. Verfahren nach Anspruch 1,
wobei die Prozessflüssigkeit (P) auf eine Temperatur von 150 °C bis 190 °C, insbesondere auf eine Temperatur von 160 °C bis 180 °C vortemperiert wird.

3. Verfahren nach Anspruch 1 oder 2,
wobei Prozessflüssigkeit über einen Zeitraum von weniger als 20 Minuten, insbesondere von weniger als 15 oder 10 Minuten auf die Bauteile (B)aufgebracht wird.

4. Verfahren nach einem der vorstehenden Ansprüche,
wobei die Bauteile (B) mehrfach eingetaucht und wieder aus der Prozessflüssigkeit (P) entnommen werden.

5. Verfahren nach einem der vorstehenden Ansprüche,
wobei Prozessflüssigkeit auf die Bauteile (B) aufgesprüht wird.

6. Verfahren nach einem der vorstehenden Ansprüche,
wobei die Prozessflüssigkeit (P) eine Mischung aus mindestens zwei Glykolen umfasst.

7. Verfahren nach Anspruch 6,
wobei die Mischung Polyethylenglykol und Triethylenglykol aufweist und insbesondere aus diesen besteht.

8. Verfahren nach einem der vorstehenden Ansprüche 6 oder 7,
wobei die Mischung zwei Glykole im Mischungsverhältnis 5:1 bis 1:5, insbesondere im Mischungsverhältnis 1:1 umfasst.

9. Verfahren nach einem der vorstehenden Ansprüche,
wobei die Prozessflüssigkeit (P) in einem Anteil von kleiner 2 Vol% Salze und/oder Mineralsäuren, insbesondere Schwefelsäure, enthält.

10. Verfahren nach einem der vorstehenden Ansprüche,
wobei die Prozessflüssigkeit (P) zu mindestens 75 Vol%, insbesondere zu mindestens 90 Vol%, aus Glykol oder einer Mischung von Glykolen besteht.

11. Verfahren nach einem der vorstehenden Ansprüche,
wobei die Prozessflüssigkeit (P) einen gelösten oder dispergierten Farbstoff umfasst.

12. Verfahren nach einem der vorstehenden Ansprüche,
wobei der Polymerwerkstoff auf einem Polymer, basierend auf wenigstens einem Monomer mit wenigstens einem Heteroatom, insbesondere Sauerstoff, Stickstoff oder Schwefel, basiert, oder wobei
der Polymerwerkstoff auf Polyamid, Polyester oder Polyetheretherketon basiert.

13. Verfahren nach Anspruch 12,
wobei das Polyamid ausgewählt ist aus der Gruppe bestehend aus PA 6, PA 11, PA 12, PA 6.6, PA 6.9, PA 6.12, PA 4.6, PA 12.12, insbesondere aus der Gruppe bestehend aus PA 6, PA 11, PA 12, oder wobei
der Polyester ausgewählt ist aus der Gruppe bestehend aus PBT, PET, PLA, PTT, PEN, PC, PEC und PAR, insbesondere aus der Gruppe bestehend aus PBT, PET und PLA.

14. Verfahren nach einem der vorstehenden Ansprüche,
wobei die Temperatur eines Bauteils (B) während des Verfahrens insbesondere kontinuierlich erfasst und als Steuerparameter verwendet wird.

15. Verfahren nach einem der vorstehenden Ansprüche,
wobei vor dem Aufbringen von Prozessflüssigkeit (P) an einem der Bauteile (B) ein Temperatursensor angebracht wird, wobei insbesondere mit dem Temperatursensor die Temperatur des Bauteils (B) für verschiedene Eindringtiefen erfasst wird.

16. Verfahren nach einem der vorstehenden Ansprüche,
wobei das Aufbringen von Prozessflüssigkeit (P) in einem Bearbeitungsbehälter (10) erfolgt, der mit einem Deckel (12) luftdicht verschließbar ist.

17. Verfahren nach einem der vorstehenden Ansprüche,
wobei die Prozessflüssigkeit in einem Temperierbehälter durch Erhitzen oder Kühlen vortemperiert und in einen Bearbeitungsbehälter überführt wird, in dem die die Prozessflüssigkeit auf die Bauteile aufgebracht wird.

18. Verfahren nach einem der vorstehenden Ansprüche,
wobei die Prozessflüssigkeit (P) zwischen dem Temperierbehälter (14) und dem Bearbeitungsbehälter (10) im Kreislauf geführt und insbesondere dabei durch zumindest eine im Kreislauf vorgesehene Temperiereinrichtung temperiert wird.

19. Verfahren nach einem der vorstehenden Ansprüche,
wobei die Bauteile (B) nach dem Entfernen der Prozessflüssigkeit (P) in dem Bearbeitungsbehälter (10) gekühlt werden.

20. Vorrichtung zur Durchführung eines Verfahrens nach zumindest einem der vorstehenden Ansprüche, umfassend einen Bearbeitungsbehälter (10) und einen Temperierbehälter (14) zur Temperierung der Prozessflüssigkeit (P), wobei die beiden Behälter (10, 14) über einen Flüssigkeitskreislauf (16, 18), in dem sich eine Pumpe (22) befindet, miteinander verbunden sind, und wobei der Bearbeitungsbehälter (10) insbesondere mit einem Deckel (12) luftdicht verschließbar und mit einem Gasauslass (54) versehen ist.

21. Vorrichtung nach Anspruch 20,
wobei der Gasauslass (54) in eine Kühleinrichtung (56, 60) mündet, die mit der Atmosphäre in Verbindung steht, wobei die Kühleinrichtung (56) insbesondere einen Kondensator (60) aufweist, der Prozessflüssigkeit (P) kondensiert.

22. Vorrichtung nach einem der Ansprüche 20 oder 21,
wobei der Deckel (12) eine Halterung (74) für zu glättende Bauteile (B) aufweist.

23. Vorrichtung nach Anspruch 22,
wobei zumindest eine Hubeinrichtung (75) vorgesehen ist, mit welcher der Deckel (12) relativ zu dem Bearbeitungsbehälter (10) und/oder die Halterung (74) relativ zu dem Deckel (12) bewegbar ist.

24. Bauteil, das mit einem Verfahren nach zumindest einem der Ansprüche 1 - 19 geglättet worden ist.
